# FASCICULE DE BREVET EUROPEEN

(11) **EP 0 823 933 B1**
(45) Date de publication et mention de la délivrance du brevet: **28.07.1999**
(21) Numéro de dépôt: 96919870.4
(22) Date de dépôt: 06.05.1996
(51) Int. Cl.: C09D 183/04, C09D 183/14

(54) **PROCEDE DE TRAITEMENT D'UN ELEMENT DE CONDITIONNEMENT, NOTAMMENT A USAGE MEDICAL OU PHARMACEUTIQUE; ELEMENT DE CONDITIONNEMENT AINSI TRAITE**
BEHANDLUNGSVERFAHREN FÜR VERPACKUNGSGEGENSTÄNDE, INSBESONDERE FÜR MEDIZINISCHE ODER PHARMAZEUTISCHE VERWENDUNG UND SO BEHANDELTE GEGENSTÄNDE
METHOD FOR TREATING A PACKAGING ELEMENT, PARTICULARLY FOR MEDICAL OR PHARMACEUTICAL USE, AND PACKAGING ELEMENT TREATED THEREBY

(30) Priorité: 04.05.1995 FR 9505333
(43) Date de publication de la demande: 18.02.1998
(73) Titulaire: Societé de Transformation des Elastomères a Usages Médicaux et Industriels, 93126 La Courneuve (FR)
(72) Inventeur: CABURET, Laurent, F-92250 La Garenne-Colombes (FR); ASFARDJANI, Kamyar, F-59800 Lille (FR); DESSAUX, Odile, F-59800 Lille (FR); GOUDMAND, Pierre, F-59800 Lille (FR); JAMA, Charaffedine, F-59110 La Madeleine - Lille (FR)
(74) Mandataire: Hubert, Philippe
(86) Numéro de dépôt international: FR9600683
(87) Numéro de publication internationale: WO9634926

(56) Documents cités:
- EP-A- 0 329 041
- EP-A- 0 516 308
- EP-A- 0 590 467
- DATABASE WPI Derwent Publications Ltd., London, GB; AN 81-86325D XP002013806 & JP,A,56 129 860 (SEKISUI) , 12 Octobre 1981
- DATABASE WPI Derwent Publications Ltd., London, GB; AN 95-118767 XP002013807 & JP,A,07 041 579 (TOYOBO) , 10 Février 1995

## Description

La présente invention concerne généralement un procédé de traitement d'un élément de conditionnement, notamment à usage médical ou pharmaceutique et l'élément de conditionnement ainsi traité.

Plus précisément, ce procédé a pour but de fournir un élément de conditionnement dont les caractéristiques permettent d'éviter toute contamination des produits conditionnés en limitant les échanges contenant-contenu tout en permettant une utilisation aisée à l'échelle industrielle.

Pour des raisons de clarté, la description qui va suivre sera faite plus particulièrement en référence à un élément de bouchage à usage médical ou pharmaceutique, mais le principe général de l'invention s'applique à tout élément de conditionnement de produits destinés à être préservés de toute contamination.

On sait que les produits pharmaceutiques doivent être conditionnés de manière telle qu'ils puissent rester stériles et protégés du milieu extérieur.

Malgré le grand soin avec lequel ils sont fabriqués, les éléments de conditionnement utilisés jusqu'à présent dans l'industrie pharmaceutique ne sont pas parfaitement inertes vis-à-vis des produits conditionnés.

C'est ainsi en particulier que les éléments de conditionnement, dont au moins une partie est réalisée en élastomère, ont tendance à contaminer les produits conditionnés avec lesquels ils sont en contact par relarguage de certains résidus provenant de leur procédé de fabrication, et notamment d'ions métalliques ou de métaux lourds contenus dans les charges généralement associées à ces élastomères.

Par ailleurs, ces éléments de conditionnement ont tendance à s'agglomérer entre eux lors du stockage ou de leur stérilisation, de sorte qu'il est nécessaire à l'échelle industrielle, de lubrifier ces éléments, ce qui entraîne la génération de particules indésirables de lubrifiant et accroît les problèmes de contamination précités.

Pour pallier à ces inconvénients, de nombreuses solutions ont été proposées, sans qu'aucune ne se soit avérée complètement satisfaisante à l'échelle industrielle.

D'une façon commune à toutes ces solutions, il est proposé de revêtir la surface d'au moins les parties dudit élément de conditionnement susceptibles d'être en contact avec les produits conditionnés par une couche ou film de polymère assurant un effet "barrière", c'est-à-dire limitant les échanges contenant-contenu, et/ou présentant un faible coefficient de frottement ainsi que des propriétés d'anti-adhérence compatibles avec les contraintes industrielles des chaînes de conditionnement automatisées existantes.

Cest ainsi que dans les documents JP-84-19464 et JP-84-218830, il a été proposé de soumettre l'élément de conditionnement en élastomère, à une atmosphère de fluor gazeux.

Cette technique permet de diminuer de façon satisfaisante le coefficient de friction de l'élément de conditionnement mais n'empêche pas les migrations d'impuretés issues de ce dernier vers les produits conditionnés.

Dans le document EP-296.878, il a été proposé de revêtir l'élément de conditionnement en élastomère à l'aide d'un polysiloxane modifié, par un procédé à deux étapes consistant à appliquer ledit polymère à la surface de l'élément de conditionnement puis à le lier à cette dernière soit par chauffage, soit par irradiation.

L'utilisation d'un solvant est préconisée pour permettre une application aisée du polymère sur l'élément de conditionnement.

Cependant, le procédé décrit dans ce document antérieur ne permet pas d'empêcher de façon satisfaisante la migration des impuretés issues de l'élément de conditionnement en élastomère vers les produits conditionnés.

En outre, les groupements réactifs du polysiloxane modifié destinés à permettre son accrochage sur ledit élément de conditionnement présentent une toxicité non négligeable.

Enfin, de par l'affinité des élastomères avec certains solvants, un risque de gonflement de l'élastomère apparaît avec l'incertitude de pouvoir éliminer totalement le solvant avant que l'élément en élastomère ne soit utilisé.

Les deux procédés qui viennent d'être décrits font en outre appel pour leur mise en oeuvre à des installations spécifiques et onéreuses notamment en raison de la relative toxicité de certains des produits utilisés, ce qui constitue, comme on le comprend, un obstacle sérieux à l'exploitation de ces procédés à l'échelle industrielle.

Dans le document WO-88/08012, l'utilisation d'un revêtement à base de polyparaxylylène est préconisée pour des éléments de bouchage en élastomère à usage pharmaceutique.

Ce revêtement présente un coefficient de frottement relativement bas, inférieur à 0,5 et de très bonnes propriétés d'anti-adhérence.

Cependant, les propriétés de surface intrinsèques de ce revêtement entraînent une perte d'étanchéité au niveau de la zone de contact entre l'élément de bouchage en élastomère ainsi revêtu et la partie rigide du contenant (généralement réalisée en verre, en matière plastique ou métallique).

Cette perte d'étanchéité constitue un inconvénient majeur dans le cas du conditionnement de produits lyophilisés, le passage d'oxygène ou de vapeur d'eau en résultant étant susceptible de déstabiliser la préparation destinée à être conditionnée.

Dans ces conditions, la présente invention a pour but de résoudre le problème technique consistant en la fourniture d'un procédé de traitement d'un élément de conditionnement en élastomère, notamment de bouchage, destiné en particulier à un usage médical ou pharmaceutique, par revêtement à l'aide d'un film de polymère qui permette d'obtenir un élément de conditionnement qui présente les mêmes propriétés qu'un même élément non revêtu avec en outre les propriétés supplémentaires apportées par le revêtement, en particulier des propriétés "barrière" permettant d'éviter les échanges entre les produits conditionnés et l'élément de conditionnement ainsi que des propriétés d'anti-adhérence et de glissement telles que définies précédemment.

Parmi les propriétés d'un élément de conditionnement non revêtu que l'on souhaite conserver dans le cadre de la présente invention, on citera notamment :
- une excellente imperméabilité aux gaz et germes présents dans le milieu extérieur ;
- une excellente étanchéité par contact avec le verre, une matière plastique ou métallique;
- une facilité de perçage par un trocart ou une aiguille hypodermique ;
- une faculté d'auto-obturation après plusieurs perçages par un trocart ou une aiguille hypodermique ;
- une non-génération de fragments lors du perçage par un trocart ou une aiguille hypodermique;
- une aptitude à la stérilisation par vapeur, par chaleur sèche, par l'oxyde d'éthylène ou par des rayonnements ionisants.

Il a été découvert, et ceci constitue le fondement de la présente invention, qu'il était possible de résoudre de façon pleinement satisfaisante le problème technique précité :
- d'une part, en utilisant un procédé de revêtement particulier consistant en une polymérisation assistée par plasma froid en écoulement, et ;
- d'autre part, en choisissant pour cette polymérisation certains polymères particuliers de la famille des siloxanes ou des silazanes.

L'utilisation de plasma froid en écoulement est une technique connue pour le traitement de surface d'objets variés.

Le document FR-2.616.088 décrit par exemple l'utilisation de cette technique pour traiter la surface d'un objet en polypropylène, destiné à être revêtu par une résine époxy.

Le document WO-92/03591 décrit l'utilisation de cette technique pour le traitement de surface de fibres textiles de façon à conférer à ces dernières des propriétés d'anti-salissures et d'anti-mouillabilité.

Le document FR-2.701.492 décrit l'utilisation de cette technique pour réaliser des couches minces, homogènes et adhérentes à la surface de substrats variés dans la réalisation de dispositifs électroniques ou micro-électronique.

Cependant, il est important de noter que la technique de polymérisation assistée par plasma froid en écoulement n'a jamais été préconisée pour le traitement d'objets en élastomère ou pour diminuer le coefficient de frottement de tels objets.

En outre, l'état de la technique ne suggère pas l'utilisation particulière des monomères de siloxanes ou de silazanes utilisés dans le cadre de la présente invention.

Ainsi, selon un premier aspect, la présente invention a pour objet un procédé de traitement d'un élément de conditionnement en élastomère, notamment de bouchage, destiné en particulier à un usage médical ou pharmaceutique, comprenant le revêtement par un film de polymère d'au moins les parties dudit élément susceptibles d'être en contact avec les produits conditionnés, caractérisé en ce que ledit revêtement est réalisé par polymérisation assistée par plasma froid en écoulement, d'au moins un monomère choisi parmi les siloxanes et les silazanes de formule : 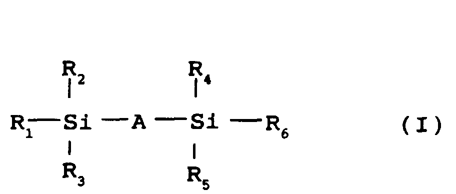 dans laquelle :
A représente un atome d'oxygène ou le groupe NH et ;
R₁, R₂, R₃, R₄, R₅ et R₆ représentent indépendamment un atome d'hydrogène ou un groupe alkyle ou alcoxy ayant de 1 à 4 atomes de carbone, de préférence un groupe méthyle, étant précisé que l'un au moins de R₁, R₂, R₃, R₄, R₅ et R₆ représente un atome d'hydrogène.

D'une façon générale, l'homme de métier pourra se reporter aux documents précités incorporés ici par référence, et notamment au document FR-2.701.492 pour une description détaillée de traitement par plasma froid en écoulement, encore appelée plasma froid différé.

Pour l'essentiel, un plasma froid en écoulement est obtenu par extraction des espèces excitées atomiques ou ioniques d'un plasma après détente en régime dynamique en dehors de la zone de décharge micro-ondes à l'intérieure de laquelle a été formé ledit plasma.

Le procédé conforme à la présente invention s'applique spécifiquement aux éléments de conditionnement en élastomère.

Ces élastomères peuvent être de tout type, synthétique, naturel ou thermoplastique comportant ou non une phase réticulée.

Il peut s'agir par exemple de caoutchouc naturel, de copolymères d'isobutylène et d'isoprène tels que le caoutchouc butyle, éventuellement halogénés, ces derniers étant généralement préférés en raison de leur faible perméabilité aux gaz et à la vapeur d'eau.

Le procédé conforme à la présente invention s'applique tout particulièrement aux éléments de bouchage à usage médical ou pharmaceutique comme en particulier des bouchons de flacon, des disques ou des rondelles, des embouts de pistons de seringue ou encore des dispositifs de protection d'aiguilles de seringue.

Bien entendu, ce procédé peut également s'appliquer d'une façon générale à tout élément de conditionnement en élastomère pour lequel il serait nécessaire de réduire le coefficient de frottement et d'éviter les échanges contenant-contenu.

Avantageusement, le monomère utilisé dans le cadre du procédé conforme à l'invention est le tétraméthyldisiloxane de formule :

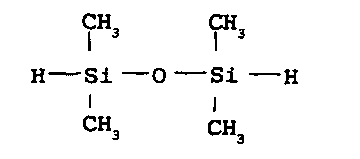

Ce monomère a conduit aux meilleurs résultats mais d'autres monomères de formule (I) peuvent également convenir dans le cadre de la présente invention, et l'on mentionnera en particulier à cet égard des monomères de type alcoxysilane, par exemple triméthoxysilane ; des monomères de type silazane, par exemple tétraméthyldisilazane.

Il a été constaté que la présence d'au moins un groupement 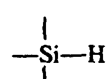 est importante pour l'obtention par la technique utilisée, d'un revêtement répondant aux divers objectifs rappelés précédemment.

Selon une caractéristique particulière du procédé conforme à la présente invention, le plasma froid en écoulement est un plasma d'azote. En effet, l'azote présente une inertie remarquable et son coût est actuellement suffisamment bas pour être compatible avec une utilisation industrielle.

Toutefois, d'autres gaz plasmagènes peuvent être éventuellement utilisés comme par exemple l'argon, le xénon, le monoxyde d'azote ou l'oxygène.

Eventuellement le gaz plasmagène peut être dopé par un agent tel que le NF₃, le CF₄, les gaz halogène ou le NH₃.

Il a été observé, et ceci constitue une caractéristique originale du procédé de l'invention, que l'effet "barrière" du film de polymère appliqué sur l'élément de conditionnement en élastomère peut être amélioré par l'utilisation d'oxygène gazeux comme co-facteur de polymérisation.

L'oxygène gazeux peut être introduit par injection soit en amont de l'injection du monomère, soit simultanément avec celui-ci.

Avantageusement, l'oxygène est utilisé en une quantité en volume comprise entre 0 % et 50 %, de préférence entre 0 et 20 %, du volume du gaz plasmagène utilisé pour former le plasma précité.

D'une façon générale, l'épaisseur du film de polymère est comprise entre 100 Å et quelques microns de préférence entre 100 et 10000 Å et dépend essentiellement de la durée du traitement.

Cette épaisseur relativement faible est compatible avec les tolérances dimensionnelles acceptables pour de tels éléments de conditionnement, et permet donc d'utiliser les mêmes outillages, notamment les mêmes moules, que pour la production d'éléments non destinés à être revêtus.

D'une façon générale, le film de polymère peut être déposé uniquement sur les parties de l'élément de conditionnement susceptibles d'être en contact avec les produits conditionnés.

Avantageusement, notamment dans le cas des éléments de bouchage, ce film sera déposé sur l'intégralité de la surface dudit élément de conditionnement.

Selon un second aspect, la présente demande vise à couvrir un élément de conditionnement en élastomère, notamment de bouchage à usage médical ou pharmaceutique susceptible d'être obtenu par le procédé qui vient d'être décrit.

L'invention sera mieux comprise et d'autres caractéristiques et avantages de celle-ci apparaîtront plus clairement à la lecture de la description explicative qui va suivre, faite en référence à la figure unique annexée illustrant de façon schématique une installation permettant la mise en oeuvre de la présente invention.

Dans cette figure unique, le chiffre de référence (1) représente une conduite d'amenée de gaz plasmagène, le chiffre de référence (2) représente la zone de décharge permettant de former le plasma, le chiffre de référence (3) représente un réacteur dans lequel se produit la polymérisation, ce réacteur étant relié à une source d'alimentation en monomère(s) (4) et éventuellement à une source d'alimentation en oxygène (5) ainsi qu'à une pompe à vide généralement représentée par le chiffre de référence (6).

Le fonctionnement de cette installation est le suivant :

Le gaz plasmagène est introduit dans la zone de décharge (2).

D'une façon connue en soi, le plasma est obtenu en faisant passer le gaz plasmagène dans un tube de verre lui-même relié à une cavité résonnante micro-onde par l'intermédiaire d'un dispositif appelé coupleur. Une décharge est produite par transfert d'énergie du générateur d'ondes au gaz plasmagène.

Les espèces excitées sont extraites de la zone de décharge par la pompe à vide (6) et parviennent au réacteur (3) où se produit la polymérisation.

Dans le cas de l'azote, la réactivité du gaz a pour origine des atomes à l'état fondamental N (⁴S) et des molécules d'azotes excitées.

Seules les particules ayant une "durée de vie" suffisamment longue parviennent à atteindre le réacteur, de sorte que le milieu réactif à cet endroit ne contient pas d'ions ou d'électrons en quantité appréciable.

Dans le réacteur (3) encore appelé zone de post-décharge sont introduits les pièces à traiter, au moins un monomère et éventuellement un flux gazeux d'oxygène.

L'uniformité de traitement des pièces est améliorée par un brassage régulier obtenu par rotation continue ou séquencée dans le réacteur, généralement obtenue avec un tambour, dans lequel sont introduites les pièces à traiter, l'intérieur du tambour étant éventuellement équipé de pales, afin d'optimiser le mouvement des pièces dans les sens radial et axial dudit tambour.

En outre, l'uniformité du dépôt est favorisé par l'écoulement du plasma froid de gaz vers la sortie de l'enceinte de traitement où est connectée la pompe à vide (6).

Si le monomère est à l'état liquide dans des conditions normales de température et de pression, il convient bien entendu de le chauffer par exemple dans un évaporateur entouré d'un cordon chauffant régulé par un rhéostat.

Les différents paramètres que sont la nature et le débit des gaz plasmagène et de dopage, la puissance du générateur micro-onde, la nature et le débit du monomère ou oligomère, le temps de traitement, permettant de définir les caractéristiques du dépôt réalisé pourront être facilement déterminés par l'homme de métier afin d'obtenir le compromis de propriétés requis.

Parmi ces paramètres, on précisera que la fréquence du générateur micro-ondes sera ajustée à une valeur compatible avec celles autorisées industriellement (de préférence 433, 915 ou 2450 MHz), et la pression à l'intérieur du dispositif sera généralement comprise entre 3 et 20 hPa.

La vitesse de dépôt du film de polymère dépend essentiellement de la teneur en oxygène et de la teneur en monomère, et sera de préférence de l'ordre de 1 à 10 Å/s.

Les épaisseurs ainsi obtenues seront de l'ordre de quelques angströms à plusieurs microns en fonction des caractéristiques recherchées pour l'élément de conditionnement à traiter.

Il est à noter que le dépôt ainsi réalisé présente une épaisseur uniforme, puisque le monomère est appliqué sous forme gazeuse, ce qui permet de s'affranchir des problèmes de tension de surface inhérents aux liquides.

### Exemple détaillé de mise en oeuvre du procédé conforme à l'invention

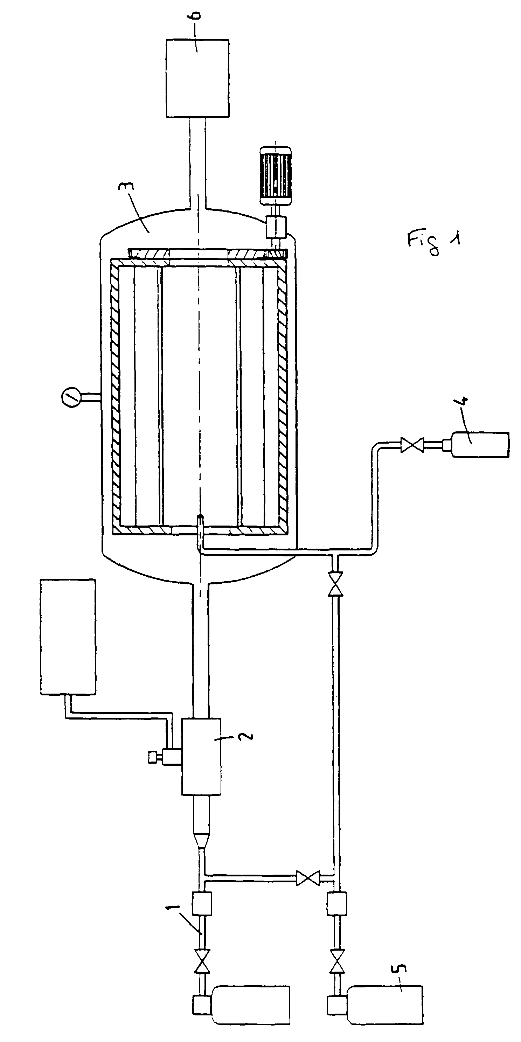

Des bouchons en élastomère à usage pharmaceutique ont été traités dans l'installation décrite à la figure 1, en utilisant un générateur micro-onde de 2450 MHz à une puissance de 800 Watts.

Dans cet exemple, on a utilisé l'azote comme gaz plasmagène et le tétraméthyldisiloxane comme monomère.

Les bouchons ont été soumis à un revêtement par polymérisation assistée par plasma froid en écoulement pendant une durée d'environ 10 minutes, les débits (ramenés aux conditions normales de température et de pression) de monomère et d'azote étant respectivement de 100 cm^{3/}mn et 8 l/mn.

On obtient ainsi un film uniforme de tétraméthyldisiloxane polymérisé d'une épaisseur d'environ 800 Angströms.

Les bouchons ainsi traités présentent un coefficient de frottement sur inox poli inférieur à 0,35, et garantissent une étanchéité satisfaisante après insertion dans le col d'un flacon de dimension appropriée.

Les essais, dont les résultats ne sont pas rapportés ici ont démontré que ces bouchons présentent une inertie chimique remarquable lors d'un contact avec un composé pharmaceutique, en limitant la migration d'espèces indésirables.

Il a en particulier été montré que la quantité d'ions zinc extraite après autoclavage dans l'eau distillée peut être divisée par un facteur de 5 grâce à la mise en oeuvre du procédé conforme à l'invention.

En outre, ces bouchons se sont avérés particulièrement appropriés lors du passage en chaîne automatisée de conditionnement de produits pharmaceutiques, sans adjonction de lubrifiant.

En outre, les bouchons traités par le procédé conforme à l'invention ont conservé leurs propriétés initiales avant revêtement.

Le procédé qui vient d'être décrit présente de très nombreux avantages.

Outre, ceux mentionnés précédemment, on peut encore souligner le fait que ce procédé permet de revêtir les éléments de conditionnement en élastomère sans préparation préalable de leur état de surface et d'effectuer le dépôt de polymère en l'absence de solvant ou de substances dangereuses ou toxiques.

Il est encore à noter que le dépôt obtenu à partir de monomère de type siloxanique permet d'obtenir un revêtement transparent avantageux sur le plan esthétique.

Le dépôt étant effectué à température ambiante, il est également important de noter l'absence de risque de dégradation à la chaleur de l'élément de conditionnement.

En outre, les éléments de conditionnement en élastomère traités par ce procédé satisfont aux tests des pharmacopées et notamment ceux de la Pharmacopée Européenne.

En outre, ce procédé est peu coûteux en énergie et en matière première et sans impact sur l'environnement.

## Revendications

1. Procédé de traitement d'un élément de conditionnement en élastomère, comprenant le revêtement par un film de polymère d'au moins les parties dudit élément susceptibles d'être en contact avec les produits conditionnés, caractérisé en ce que ledit revêtement est réalisé par polymérisation assistée par plasma froid en écoulement, d'au moins un monomère choisi parmi les siloxanes et les silazanes de formule : 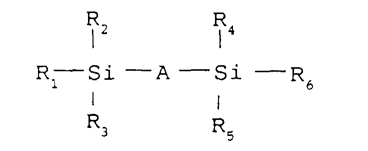 dans laquelle :
A représente un atome d'oxygène ou le groupe NH et ;
R₁, R₂, R₃, R₄, R₅ et R₆ représentent indépendemment un atome d'hydrogène ou un groupe alkyle ou alcoxy ayant de 1 à 4 atomes de carbone, de préférence un groupe méthyle, étant précisé que l'un au moins de R₁, R₂, R₃, R₄, R₅ et R₆ représente un atome d'hydrogène.

2. Procédé selon la revendication 1, caractérisé en ce que les parties précitées de l'élément de conditionnement sont en un élastomère de type synthétique, naturel ou thermoplastique comportant ou non une phase réticulée.

3. Procédé selon la revendication 1 ou 2, caractérisé en ce que l'élément de conditionnement précité est un élément de bouchage à usage médical ou pharmaceutique.

4. Procédé selon la revendication 1 ou 2, caractérisé en ce que l'élément de conditionnement précité est un bouchon de flacon, un disque ou une rondelle, un embout de piston de seringue ou un dispositif de protection d'aiguille ou de seringue.

5. Procédé selon l'une des revendications 1 à 4, caractérisé en ce que le monomère précité est le tétraméthyldisiloxane de formule :

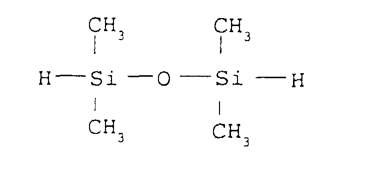

6. Procédé selon l'une des revendications 1 à 5, caractérisé en ce que le plasma froid en écoulement précité est un plasma d'azote.

7. Procédé selon l'une des revendications 1 à 6, caractérisé en ce que la polymérisation précitée est réalisée en présence d'oxygène gazeux comme facteur de co-polymérisation.

8. Procédé selon la revendication 7, caractérisé en ce que l'oxygène est utilisé en une quantité en volume comprise entre 0 % et 50 % du volume du gaz plasmogène utilisé pour former le plasma.

9. Procédé selon l'une des revendications 1 à 8, caractérisé en ce que le film de polymère précité présente une épaisseur comprise entre 100 et 10000 Å.

10. Élément de conditionnement, notamment de bouchage à usage médical ou pharmaceutique, susceptible d'être obtenu par la mise en oeuvre du procédé selon l'une quelconque des revendications 1 à 9.

## Patentansprüche

1. Verfahren zur Behandlung eines Konditionierungselements aus Elastomer, welches das Umhüllen zumindest der Teile des Elements, die mit den konditionierten Produkten in Berührung kommen können, mit einem Polymerfilm umfaßt, dadurch gekennzeichnet, daß das Umhüllen durchgeführt wird mittels durch fließendes kaltes Plasma unterstützter Polymerisation zumindest eines Monomers, ausgewählt aus den Siloxanen und den Silazanen der Formel: 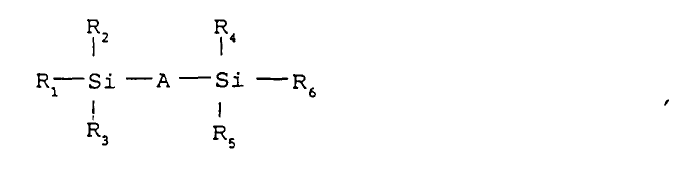 worin:
A ein Sauerstoffatom oder die Gruppe NH bedeutet; und
R₁, R₂, R₃, R₄, R₅ und R₆ unabhängig ein Wasserstoffatom oder eine Alkyl- oder Alkoxy-Gruppe mit 1 bis 4 Kohlenstoffatomen, vorzugsweise eine Methyl-Gruppe, darstellen, mit der Maßgabe, daß zumindest eines von R₁, R₂, R₃, R₄, R₅ und R₆ ein Wasserstoffatom ist.

2. Verfahren nach Anspruch 1, dadurch gekennzeichnet, daß die genannten Teile des Konditionierungselements aus einem Elastomer vom synthetischen, natürlichen oder thermoplastischen Typ, gegebenenfalls umfassend eine vernetzte Phase, bestehen.

3. Verfahren nach Anspruch 1 oder 2, dadurch gekennzeichnet, daß das genannte Konditionierungselement ein Dichtungselement zur medizinischen oder pharmazeutischen Verwendung ist.

4. Verfahren nach Anspruch 1 oder 2, dadurch gekennzeichnet, daß das genannte Konditionierungselement ein Stopfen für ein Fläschchen, eine Scheibe oder ein Plättchen, ein Ende eines Spritzenkolbens oder eine Schutzvorrichtung für eine Nadel oder eine Spritze ist.

5. Verfahren nach einem der Ansprüche 1 bis 4, dadurch gekennzeichnet, daß das genannte Monomer Tetramethyldisiloxan der Formel ist:

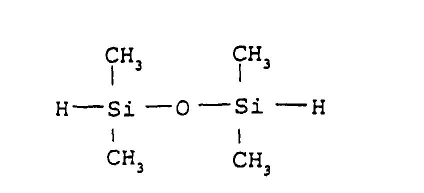

6. Verfahren nach einem der Ansprüche 1 bis 5, dadurch gekennzeichnet, daß das fließende kalte Plasma ein Stickstoffplasma ist.

7. Verfahren nach einem der Ansprüche 1 bis 6, dadurch gekennzeichnet, daß die genannte Polymerisation in Anwesenheit von gasförmigem Sauerstoff als Copolymerisationsfaktor durchgeführt wird.

8. Verfahren nach Anspruch 7, dadurch gekennzeichnet, daß der Sauerstoff in einer Volumenmenge verwendet wird, die zwischen 0 % und 50 % des Volumens des zur Bildung des Plasmas verwendeten plasmogenen Gases beträgt.

9. Verfahren nach einem der Ansprüche 1 bis 8, dadurch gekennzeichnet, daß der genannte Polymerfilm eine Dicke zwischen 100 und 10 000 Å aufweist.

10. Konditionierungselement, insbesondere für eine Dichtung zur medizinischen oder pharmazeutischen Verwendung, welches mittels der Durchführung des Verfahrens nach einem der Ansprüche 1 bis 9 erhalten werden kann.

## Claims

1. A method of treating an elastomeric packaging element, comprising the coating with a polymer film of at least those parts of said element which are liable to be in contact with the products packaged, characterised in that said coating is produced by cold-far-remote-plasma-assisted polymerisation, of at least one monomer selected from the siloxanes and silazanes of formula : 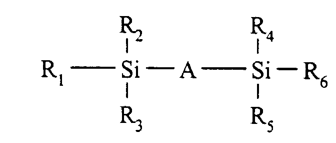 in which :
A represents an oxygen atom or an NH group and;
R₁, R₂, R₃, R₄, R₅ and R₆ represent, independently, a hydrogen atom or an alkyl or alkoxy group having from 1 to 4 carbon atoms, preferably a methyl group, it being specified that at least one of R₁, R₂, R₃, R₄, R₅ and R₆ represents a hydrogen atom.

2. The method according to claim 1, characterised in that the aforementioned parts of the packaging element are made of a synthetic, natural or thermoplastic type elastomer having or not having a crosslinked phase.

3. The method according to claim 1 or 2, characterised in that the aforementioned packaging element is a sealing element for medical or pharmaceutical use.

4. The method according to claim 1 or 2, characterised in that the aforementioned packaging element is a bottle stopper, a disk, a washer, a syringe plunger tip, or a needle and syringe protection device.

5. The method according to one of claims 1 to 4, characterised in that the aforementioned monomer is tetramethyldisiloxane of formula :

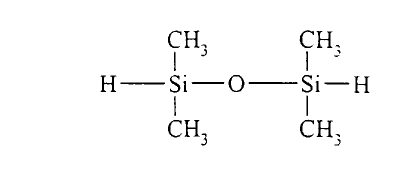

6. The method according to one of claims 1 to 5, characterised in that the aforementioned flowing cold plasma is a nitrogen plasma.

7. The method according to one of claims 1 to 6, characterised in that the aforementioned polymerisation is carried out in the presence of gaseous oxygen as a co-polymerisation factor.

8. The method according to claim 7, characterised in that oxygen is used in an amount by volume of between 0% and 50% of the volume of the plasma-generating gas used to form the plasma.

9. The method according to one of claims 1 to 8, characterised in that the aforementioned film of polymer has a thickness of between 100 and 10000 Å.

10. A packaging element, notably a sealing element for medical or pharmaceutical use, obtainable by the implementation of the method according to any one of claims 1 to 9.
